# EUROPEAN PATENT SPECIFICATION

(11) **EP 3 565 351 B1**
(45) Date of publication and mention of the grant of the patent: **03.12.2025**
(21) Application number: 18847587.5
(22) Date of filing: 21.08.2018
(51) Int. Cl.: H04L 5/00, H04W 72/23, H04W 72/12, H04W 72/0446

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 21.08.2017 CN 201710720159
(43) Date of publication of application: 06.11.2019
(73) Proprietor: Huawei Technologies Co., Ltd., Longgang District Shenzhen, Guangdong 518129 (CN)
(72) Inventor: LI, Junchao, Shenzhen Guangdong 518129 (CN); WANG, Yafei, Shenzhen Guangdong 518129 (CN); ZHANG, Chi, Shenzhen Guangdong 518129 (CN); TANG, Hao, Shenzhen Guangdong 518129 (CN)
(74) Representative: Pfenning, Meinig & Partner mbB
(86) International application number: PCT/CN2018/101436
(87) International publication number: WO 2019/037695

(56) References cited:
- CN-A- 102 971 981
- CN-A- 103 391 159
- CN-A- 105 874 738
- US-A1- 2011 176 461
- VIVO: "UE behaviors related to SFI", vol. RAN WG1, no. Prague, P.R. Czechia; 20170821 - 20170825, 20 August 2017 (2017-08-20), XP051315663, Retrieved from the Internet <URL:http://www.3gpp.org/ftp/Meetings_3GPP_SYNC/RAN1/Docs/> [retrieved on 20170820]
- SPREADTRUM COMMUNICATIONS: "The relation among UE-specific DCI, GC-PDCCH, and semi-static signaling", vol. RAN WG1, no. Prague, Czech Republic; 20170821 - 20170825, 20 August 2017 (2017-08-20), XP051315866, Retrieved from the Internet <URL:http://www.3gpp.org/ftp/Meetings_3GPP_SYNC/RAN1/Docs/> [retrieved on 20170820]
- QUALCOMM INCORPORATED: "UE behavior related to group common PDCCH", vol. RAN WG1, no. Prague, Czech Republic; 20170821 - 20170825, 20 August 2017 (2017-08-20), XP051316226, Retrieved from the Internet <URL:http://www.3gpp.org/ftp/Meetings_3GPP_SYNC/RAN1/Docs/> [retrieved on 20170820]
- HUAWEI ET AL: "Overview of reserved resources", vol. RAN WG1, no. Prague, Czech Republic; 20170821 - 20170825, 20 August 2017 (2017-08-20), XP051316534, Retrieved from the Internet <URL:http://www.3gpp.org/ftp/Meetings_3GPP_SYNC/RAN1/Docs/> [retrieved on 20170820]
- CMCC: "UE behaviour related to dynamic and semi-static configured resources", vol. RAN WG1, no. Qingdao, P.R. China; 20170627 - 20170630, 17 June 2017 (2017-06-17), XP051305210, Retrieved from the Internet <URL:http://www.3gpp.org/ftp/tsg_ran/WG1_RL1/TSGR1_AH/NR_AH_1706/Docs/> [retrieved on 20170617]

## Description

### TECHNICAL FIELD

The present invention relates to the field of communications technologies, and in particular, to a communication method and a communications apparatus.

### BACKGROUND

In 5th generation mobile communications (the 5th generation, 5G for short) new radio (new radio, NR for short) standardization, a flexible slot structure is supported. The slot structure is used to indicate, in a slot or a group of slots, which symbols are uplink, which symbols are downlink, and which symbols are "others (other)", where the "others" include an "unknown (unknown)" without any assumption by a terminal device, and may also include an "empty (empty)" for which the terminal device assumes that there is no uplink/downlink transmission or an interference measurement. The slot structure may also be referred to as a slot format (slot format), and may be indicated by using slot format related information (slot format related information, SFI).

To support forward compatibility, some available resources are reserved for compatibility of a subsequent service or standard evolution in the NR standardization, for example, the foregoing "other" symbols. These reserved available resources may be referred to as reserved resources. These reserved resources may be allocated to or reserved for a part of (including one) terminal devices for use, but such allocation or reservation may conflict with scheduling of another part of (including one) terminal devices. In this case, how to process the another part of terminal devices is a problem that needs to be resolved urgently now.
"UE behaviors related to SFI" (VIVO, vol. RAN WG1, no. Prague, P.R. Czechia; 20170821 - 20170825, (20170820), 3GPP DRAFT; R1-1712851_UE BEHAVIORS RELATED TO SFI, 3RD GENERATION PARTNERSHIP PROJECT (3GPP)") discloses that the UE configured UL transmission is allowed only on the UL portion of the slot indicated by SFI.
"The relation among UE-specific DCI, GC-PDCCH, and semi-static signaling" (SPREADTRUM COMMUNICATIONS, vol. RAN WG1, no. Prague, Czech Republic; 20170821 - 20170825, (20170820), 3GPP DRAFT; R1-1713057_THE RELATION AMONG UE-SPECIFIC DCI, GC-PDCCH, AND SEMI-STATIC SIGNALING_FINAL, 3RD GENERATION PARTNERSHIP PROJECT (3GPP)) discloses that SFI takes the priority while ignoring the cross-slot DCI carried on UE specific PDCCH in previous slot scheduling the current slot.
"UE behavior related to group common PDCCH" (QUALCOMM INCORPORATED, vol. RAN WG1, no. Prague, Czech Republic; 20170821 - 20170825, (20170820), 3GPP DRAFT; R1-1713424_UE BEHAVIOUR GROUP COMMON PDCCH, 3RD GENERATION PARTNERSHIP PROJECT (3GPP)) discloses SFI handling.
HUAWEI ET AL: "Overview of reserved resources", 3GPP DRAFT, R1-1713735, vol. RAN WG1, no. Prague, Czech Republic; 20170821 - 20170825, (20170820), discloses that the reserved resources scheduled by the group common SFI can be overridden by the resources scheduled by the scheduling assignment/grant.
CMCC: "UE behavior related to dynamic and semi-static configured resources", 3GPP DRAFT, R1-1710781, vol. RAN WG1, no. Qingdao, P.R.China; 20170627 - 20170630, (20170617), , discloses that in case of conflict and in order to prioritize URLLC traffic, the group common SFI should take precedence over the UE-specific DCI.

### SUMMARY

The present invention is as defined in the appended set of claims. Embodiments of the present invention provide a method and an apparatus according to the independent claims,
so that a terminal device determines a behavior thereof when a scheduled resource conflicts with another resource.

Any embodiment, aspect, example or implementation not being part of the claims, is only presented as information.

### BRIEF DESCRIPTION OF DRAWINGS

FIG. 1 is a structural diagram of a communications system according to an embodiment of the present invention;
FIG. 2 is a schematic diagram of a conflict occurring in an embodiment of the present invention;
FIG. 3 is a flowchart of a communication method according to an embodiment of the present invention;
FIG. 4 is a functional block diagram of a communications apparatus according to an embodiment of the present invention.
FIG. 5 is a schematic diagram of a terminal device according to an embodiment of the present invention;
FIG. 6 is a schematic structural diagram of a network device according to an embodiment of the present invention; and
FIG. 7 is a schematic structural diagram of a communications apparatus according to an embodiment of the present invention.

### DESCRIPTION OF EMBODIMENTS

The following describes the technical solutions in this application with reference to the accompanying drawings.

Embodiments of this application may be applied to various communications systems. Therefore, the following description is not limited to a specific communications system. For example, the embodiments of this application are applicable to a long term evolution (long term evolution, LTE) system, a future 5th generation (5th generation, 5G) system (sometimes also referred to as a new radio (new radio, NR) system), and various evolved or converged systems.

A network device in the embodiments of this application may be a device having a wireless transceiver function, including but not limited to: a base station, a relay station, an access point, an in-vehicle device, a wearable device, a network side device in a future 5G network, a network device in a future evolved public land mobile network (public land mobile network, PLMN), an access point in a Wi-Fi system, and user equipment (user Equipment, UE), or the like. For example, the network device is a transmission point (TRP or TP) in an NR system, a next generation Node B (gNB) in an NR system, one or a group of (including a plurality of antenna panels) antenna panels of a base station in a 5G system, or the like. This is not specifically limited in the embodiments of this application.

A terminal device in the embodiments of this application may be a device having a wireless transceiver function, including but not limited to: UE, an access terminal, a subscriber unit, a subscriber station, a mobile station, a mobile console, a remote station, a remote terminal, a mobile device, a user terminal, a terminal, a radio communications device, a user agent, or a user apparatus. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, or another processing device connected to a wireless modem, an in-vehicle device a wearable device, a drone device, smart household, and a terminal device in a future network, or a terminal device in a future evolved PLMN, or the like. This is not limited in the embodiments of this application.

As described above, in 5th generation mobile communications (the 5th generation, 5G for short) new radio (new radio, NR for short) standardization, a flexible slot structure is supported. The slot structure is used to indicate, in a slot or a group of slots, which symbols are uplink, which symbols are downlink, and which symbols are "others (other)", where the "others" include an "unknown (unknown)" without any assumption by the terminal device, and may also include an "empty (empty)" for which the terminal device assumes that there is no uplink/downlink transmission or an interference measurement. The slot structure may also be referred to as a slot format (slot format), and may be indicated by using slot format related information (slot format related information, SFI).

In 5G NR, the terminal device may determine a slot structure of a slot or a group of slots based on one or more of the following four manners:
- Fixed uplink, downlink, and "other" symbols predefined in a protocol;
- Fixed or periodic uplink, downlink, and "other" symbols indicated by using semi-static signaling (such as a broadcast message, a system message, and radio resource control (radio resource control, RRC));
- Uplink, downlink, and "other" symbols indicated by a group-common physical downlink control channel (group-common physical downlink control channel, group-common PDCCH);
- Uplink and downlink symbols indicated by downlink control information (downlink control information, DCI) that carries an uplink grant (uplink grant) or a downlink assignment (downlink assignment), used for corresponding uplink and downlink data transmission.

For the group-common PDCCH carrying the slot structure, the following conclusions are currently reached: whether to send the group-common PDCCH is an implementation behavior of the base station. The base station may indicate, by using RRC signaling, whether the terminal needs to detect (decode) the group-common PDCCH, where the group-common PDCCH may be associated with a channel (refer to a channel), such as a PDCCH or a specially designed channel, and the signal carries information sent to a group of UEs. To reduce overheads of detecting the group-common PDCCH by the terminal device as much as possible, it is intended to simplify a design of the channel, for example, by using fewer bits, shorter cyclic redundancy check code (cyclic redundancy check, CRC), or a predefined or configured PDCCH candidate resource. Therefore, it may be considered that transmission robustness of the group-common PDCCH is relatively low relative to the DCI that carries the uplink grant or the downlink assignment.

Generally, it may be assumed that the base station should not give contradictory indications, such as indicating, by using signaling A, that a symbol is a downlink, and then indicating, by using signaling B, that the symbol is an uplink. Certainly, because 5G NR supports uplink and downlink changes that are more flexible than those in LTE, 5G NR can better provide a timely transmission opportunity for some burst services or reserve a resource for another service. In addition, when transmitting signaling, a network may make a transmission error. In these cases, information indicated by different signaling may conflict with each other.

Therefore, a method is required to enable the terminal device to determine a behavior when detecting contradictory indication information, for example, to determine information that is indicated by a piece of signaling and that is to be followed. The behavior of the terminal device is specified, to reduce an impact on another terminal device on the basis of reducing an impact on the data transmission of the terminal device as far as possible.

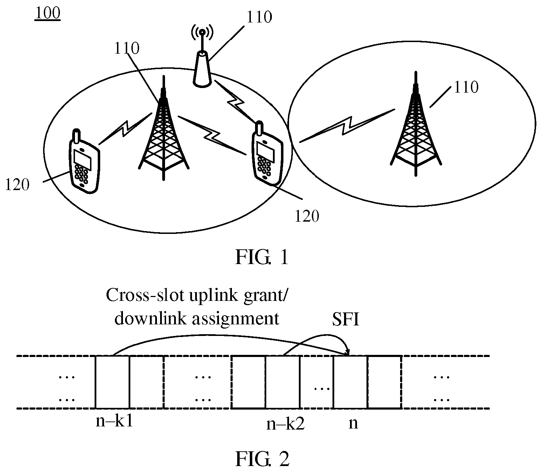

FIG. 1 is a schematic block diagram of a wireless communications system 100 according to this application. The wireless communications communication includes at least one network device 110 and a terminal device 120 located in a coverage area of the network device.

FIG. 2 is a schematic diagram of a conflict occurring in an embodiment of the present invention.

As shown in FIG. 2, in a slot n-k1 (k1 > 0), a base station schedules, by using DCI, data transmission of a terminal device in a slot n across slots. Subsequently, the terminal device detects, in a slot n-k2 (0 ≤ k2 < k1), a group-common PDCCH that is sent by the base station and that is used to indicate a slot structure of the slot n.

When the DCI and the group-common PDCCH indicate contradictory information, how to specify a behavior of the terminal device, that is, to determine information indicated by specific signaling and to be followed, has become a problem.

This application is considered by using two prerequisites.

Prerequisite 1: No burst service transmission exists or no reserved resource is needed on a time-frequency resource on which the terminal device is located, for example, no resource needs to be configured for transmission of a terminal device used in a 3GPP subsequent version (such as R16/17) or a non-3GPP terminal device. In this case, the base station does not send indication information that conflicts with the downlink control information to provide a timely transmission opportunity for some services or to reserve a resource. A burst service in this application refers to a service whose effective time is shorter than that of a scheduled service.

In this case, the terminal device may assume that the base station does not send contradictory indication information (the contradictory indication information in this application includes indication information indicating that transmission directions of a same time-frequency resource are different. For example, one indicates that the time-frequency resource is used for uplink, and another indicates that the time-frequency resource is used for downlink, or the time-frequency resource is a reserved resource (in this application, it may also be referred to as an "unknown" resource, and in this case, a transmission direction may be "another"); or, one indicates that the time-frequency resource is used for downlink, and another indicates that the time-frequency resource is used for uplink, or the time-frequency resource is a reserved resource). If the indication information conflicts with each other, it is only possible that an error occurs in detection of at least one piece of signaling. Considering the transmission robustness of the DCI that carries the uplink grant or the downlink assignment and the group-common PDCCH that carries the channel structure information as described above, or to ensure information transmission efficiency, the terminal device uses the DCI that carries the uplink grant or the downlink assignment as a high priority, that is, send uplink data or receive downlink data according to an indication of the DCI.

That no time-frequency resource used for burst service transmission exists or no reserved time-frequency resource exists may be predefined, or may be indicated by the base station by using signaling, where the signaling may be dynamic signaling (such as DCI), or may be a broadcast message or semi-static signaling (such as a system message and/or RRC).

Optionally, the base station may indicate, by using first information, the foregoing time-frequency resource for burst service transmission or the reserved time-frequency resource.

Optionally, the base station may indicate priorities of the downlink control information and the first information. For example, the base station may indicate that the priority of the downlink control information is higher than the priority of the first information.

It may be understood that, signaling indicating that no burst service transmission exists or no reserved resource is needed on the time/frequency resource on which the terminal device is located, and signaling indicating the priorities of the downlink control information and the first information may be the same signaling, and only reading thereof is different.

Prerequisite 2: Burst service transmission exists or a reserved resource is needed on a time-frequency resource on which the terminal device is located, for example, for a transmission of a terminal device used in a 3GPP subsequent version (such as R16/17) or a non-3GPP terminal device. In this case, the base station may send indication information that conflicts with the downlink control information to provide a timely transmission opportunity for some services or to reserve a resource.

In this case, a situation in which the indication information is contradictory may occur. For example, when the base station schedules, by using the downlink control information, the terminal device to send uplink data information on a specific time-frequency resource, the base station further uses first information to indicate that the time-frequency resource is further used for downlink transmission and/or is the reserved resource. Although an error may occur in detection of at least one piece of signaling, it should not be ruled out that the base station really has such a requirement. Therefore, the behavior of the terminal device should reduce a possible impact on another terminal device on the basis of reducing an impact on data transmission of the terminal device as far as possible.

For example, the base station sends the first information to indicate a time-frequency resource for burst service transmission or a reserved time-frequency resource.

Optionally, the first information is dynamic signaling (such as DCI).

Optionally, the first information is a broadcast message or semi-static signaling (such as a system message or RRC).

Optionally, the base station may indicate, by using signaling, that burst service transmission exists or a reserved resource is needed on a time/frequency resource on which the terminal device is located. Alternatively, the base station may further indicate priorities of the downlink control information and the first information. For example, the base station may indicate that the priority of the downlink control information is higher than the priority of the first information.

It may be understood that, signaling indicating that a burst service transmission exists or a reserved resource is needed on the time/frequency resource on which the terminal device is located, and signaling indicating the priorities of the downlink control information and the first information may be the same signaling, and only reading thereof is different.

In this application, that the priority of the first information is higher than the priority of the downlink control information means that the first information is allowed to cover the downlink control information for some specific channels.

The terminal device is currently scheduled in the following cases.

First case: a downlink data channel, such as a physical downlink shared channel (physical downlink shared channel, PDSCH):
In this case, because the behavior of the terminal device on a corresponding time-frequency resource is downlink reception, it is of great possibility that other terminal devices will not be affected. Therefore, in this case, the behavior of the terminal device may be left to the terminal device for design and implementation as appropriate, which is not specified in a protocol, or it is specified in a protocol that the terminal device receives the PDSCH based on the DCI in this case without considering the first information, or without considering the foregoing confliction. The received PDSCH may be a PDSCH after the base station performs rate matching or may be punctured by the base station.

Second case: uplink data information, such as a physical uplink shared channel (physical uplink shared channel, PUSCH):
In this case, the terminal device does not send the PUSCH on the time-frequency resource having contradictory indications, and transmits, on a remaining uplink time-frequency resource, to-be-transmitted uplink data after performing rate matching or puncturing on the to-be-transmitted uplink data, or the terminal device ignores the DCI and does not send the PUSCH scheduled by using the DCI. In this way, a possible impact on transmission of another terminal device may be reduced.

Third case: uplink control information, such as a physical uplink control channel (physical uplink control channel, PUCCH):
The uplink control information usually includes two types: one is used for feeding back channel state information (channel state information, CSI), and the other is used for feeding back acknowledgement (acknowledge/negative acknowledge, ACK/NACK).

For a PUCCH resource for feeding back acknowledgement, the terminal device may consider by default that the base station does not configure a burst service resource or the reserved resource on the PUCCH resource of the terminal device. Therefore, an indication of the first information may be ignored, but the ACK/NACK is fed back on the PUCCH resource based on the DCI. In this way, timely feedback of the ACK/NACK may be ensured, thereby avoiding subsequent reconfiguration of the PUCCH resource for feeding back ACK/NACK.

For a PUCCH resource for feeding back channel state information, a behavior of the terminal device may be the same as a behavior in a PUSCH, to ensure transmission of a burst service or provide a reserved resource for another service, and avoid an impact of CSI transmission of the current terminal device on the burst service. Alternatively, the behavior of the terminal device may also be the same as the behavior of the PUCCH that feeds back ACK/NACK, to ensure timely feedback of the CSI, and avoid subsequent reconfiguration of the PUCCH resource for feedback the CSI.

By means of the foregoing design, the terminal device may determine a behavior when detecting contradictory indication information, and may reduce a possible impact on another terminal device on the basis of reducing an impact on data transmission of the terminal device as far as possible.

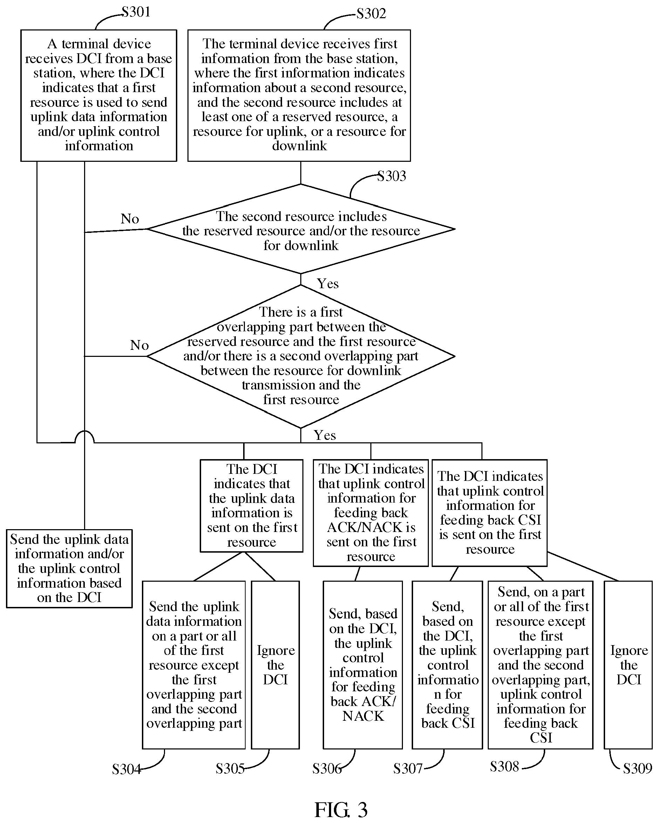

Based on the foregoing design, as shown in FIG. 3, an embodiment of this application provides a communication method, including the following steps.

S301. A terminal device receives downlink control information from a base station, where the downlink control information is used to indicate that a first resource is used to send uplink data information and/or uplink control information.

S302. The terminal device receives first information from the base station, where the first information is used to indicate information about a second resource, and the second resource includes at least one of a reserved resource, a resource for uplink transmission, or a resource for downlink transmission.

S303. The terminal device determines that the second resource includes the reserved resource and/or the resource for downlink transmission.

When the downlink control information indicates that the uplink data information is sent on the first resource, and there is a first overlapping part between the reserved resource and the first resource and/or there is a second overlapping part between the resource for downlink transmission and the first resource, the terminal device performs the following step:
S304. The terminal device sends the uplink data information on a part or all of the first resource except the first overlapping part and the second overlapping part. S305. Alternatively, the terminal device ignores the downlink control information.

In addition, when the downlink control information indicates that uplink control information for feeding back acknowledgement is sent on the first resource and there is the first overlapping part between the reserved resource and the first resource and/or there is the second overlapping part between the resource for downlink transmission and the first resource, the terminal device performs the following step.

S306. The terminal device sends, based on the downlink control information, the uplink control information for feeding back acknowledgement.

When the downlink control information indicates that, uplink control information for feeding back channel state information is sent on the first resource, and there is the first overlapping part between the reserved resource and the first resource and/or there is the second overlapping part between the resource for downlink transmission and the first resource, the terminal devices performs the following step.

S307. The terminal device sends, based on the downlink control information, the uplink control information for feeding back channel state information. S308. Alternatively, the terminal device sends, on a part or all of the first resource except the first overlapping part and the second overlapping part, the uplink control information for feeding back channel state information. S309. Alternatively, the terminal device ignores the downlink control information.

In this way, in a case in which a same resource exists in the first resource and the second resource, the terminal device may specify a behavior thereof, and may reduce a possible impact on another terminal device on the basis of reducing an impact on data transmission of the terminal device as far as possible.

It may be understood that, one of S304 and S305 may be selected for implementation after a protocol is determined or after the terminal device is designed and completed. One of S307, S308, and S309 may be selected for implementation after the protocol is determined or after the terminal device is designed and completed.

Optionally, the method may further include:
S300a. The terminal device receives first indication information, and determines that the first indication information indicates that there is a possibility that the first resource overlaps the second resource.
S300b. The terminal device determines that there is the first overlapping part between the reserved resource and the first resource and/or there is the second overlapping part between the resource for downlink transmission and the first resource.
S300a may occur before at least one of S301 to S303, and S300b may occur after or at the same time as S303, and before any one of S304 to S309.

In this way, whether to perform the foregoing steps S301 to 309 may be determined according to the first indication information. If the terminal device does not receive the first indication information, or determines, according to the first indication information, that there is no possibility that the first resource overlaps the second resource, the terminal device may determine that the downlink control information is high-priority without considering the first information indicating the information about the second resource, and perform downlink or uplink transmission based on the downlink control information.

Optionally, the sending the uplink data information on a part or all of the first resource except the first overlapping part and the second overlapping part includes:
mapping, on a part or all of the first resource except the first overlapping part and the second overlapping part, the uplink data information after rate matching, or puncturing the uplink data information on the first overlapping part and the second overlapping part.

Optionally, the sending the uplink data information for feeding back channel state information on a part or all of the first resource except the first overlapping part and the second overlapping part includes:
mapping, on a part or all of the first resource except the first overlapping part and the second overlapping part, the uplink control information used for feeding back channel state information after rate matching, or puncturing the uplink control information for feeding back channel state information on the first overlapping part and the second overlapping part.

Optionally, the first information is group-common downlink control information.

Optionally, the first information is carried in a group-common PDCCH (common-group PDCCH).

Optionally, the first information includes the SFI.

Optionally, the first resource includes at least one symbol, and the second resource includes at least one symbol. The first overlapping part includes at least one symbol, and the second overlapping part includes at least one symbol.

Optionally, the first resource includes a first frequency resource, and the second resource includes a second frequency resource. The first frequency resource includes a frequency domain width of at least one subcarrier or RB (resource block, resource block). The second frequency resource includes a frequency domain width of at least one subcarrier or RB. The first overlapping part includes a frequency domain width of at least one subcarrier or RB, and the second overlapping part includes a frequency domain width of at least one subcarrier or RB. The frequency domain width of one RB may be 12 subcarriers.

Optionally, the first resource includes a first time-frequency resource, and the second resource includes a second time-frequency resource. The first time-frequency resource includes at least one RE (resource element, resource element) or RB (resource block, resource block). The second time-frequency resource includes at least one RE or RB. The first overlapping part includes at least one RE or RB, and the second overlapping part includes at least one RE or RB.

Optionally, the first information is received after the downlink control information has been received.

For example, the downlink control information is received in an (n-k1)^{th} time domain resource unit, and the first information is received in an (n-k2)^{th} time domain resource unit, where an n^{th} time domain resource unit is a time domain resource unit included in the first resource and/or the second resource, k1 is greater than 0, k2 is not less than 0, and k1 is greater than k2.

Optionally, the first indication information is higher layer signaling.

Optionally, the first indication information is further used to indicate whether the first information needs to be detected (decoded).

In this way, whether there is a possibility that the first resource overlaps the second resource is indirectly indicated by indicating whether the first information needs to be detected.

When the first information needs to be detected, it indicates that there is the possibility that the first resource overlaps the second resource. When the first information does not need to be detected, it indicates that there is no possibility that the first resource overlaps the second resource.

Optionally, the foregoing method may further include:
receiving, by the terminal device, second indication information from a base station, and determining that the second indication information indicates that the first information needs to be detected.

In this way, signaling indicating whether the first information needs to be detected and signaling indicating whether there is the possibility that the first resource overlaps the second resource are not be reused.

When it is indicated that the first information needs to be detected, there is still the possibility that the first resource overlaps the second resource, or there is no possibility that the first resource overlaps the second resource.

Optionally, the second indication information is further used to indicate configuration information of the first information. The configuration information includes at least one of a time-frequency resource, a resource mapping manner, an aggregation level, or a downlink control channel candidate.

Optionally, the first information is group-common downlink control information (DCI), and may be sent by using a group-common downlink control channel resource.

Optionally, the second indication information may indicate a time-frequency resource in which the group-common downlink control channel resource is located, including a corresponding RB in frequency domain and/or a corresponding symbol in time domain. The second indication information may further indicate a resource mapping manner of the group-common downlink control channel resource, including first time domain mapping or first frequency domain mapping, whether interleaving is used, and what is interleaving granularity. The second indication information may further indicate an aggregation level corresponding to the group-common downlink control information, that is, a quantity of consecutive control channel elements (control channel element, CCE) used to carry the group-common downlink control information, such as 4 and/or 8. The second indication information may further indicate a possible PDCCH candidate of the group-common downlink control channel information at each aggregation level, for example, which four or eight consecutive CCEs are used.

In this case, the signaling indicating that the first information needs to be detected and the signaling used to indicate the configuration information of the first information may be multiplexed.

In a case in which the terminal device has received the signaling used to indicate the configuration information of the first information, it indicates that the first information needs to be detected. In a case in which the terminal device has not received the signaling used to indicate the configuration information of the first information, it indicates that the first information does not need to be detected.

Therefore, signaling overheads may be reduced.

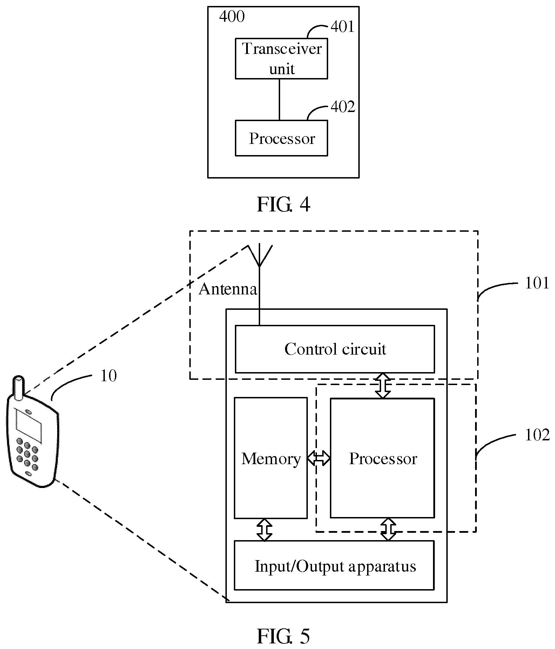

Based on a same inventive concept, as shown in FIG. 4, an embodiment of the present invention further provides a communications apparatus 400. The communications apparatus is configured to implement any one of the foregoing methods performed by the terminal device.

The communication apparatus includes:
a transceiver unit (401), configured to: receive downlink control information, where the downlink control information is used to indicate that a first resource is used to send uplink data information and/or uplink control information, and receive first information, where the first information is used to indicate information about a second resource, and the second resource includes at least one of a reserved resource, a resource for uplink transmission, or a resource for downlink transmission; and
at least one processor (402), configured to determine that the second resource includes the reserved resource and/or the resource for downlink transmission; where
the transceiver unit is further configured to send the uplink data information on a part or all of the first resource except a first overlapping part and a second overlapping part when the processor determines that the downlink control information indicates that the uplink data information is sent on the first resource, and there is the first overlapping part between the reserved resource and the first resource and/or there is the second overlapping part between the resource for downlink transmission and the first resource; or, the processor is further configured to: when determining that the downlink control information indicates that the uplink data information is sent on the first resource, and there is the first overlapping part between the reserved resource and the first resource and/or there is the second overlapping part between the resource for downlink transmission and the first resource, ignore the downlink control information; and
the transceiver unit is further configured to send, based on the downlink control information, uplink control information for feeding back acknowledgement when it is determined that the downlink control information indicates that the uplink control information for feeding back acknowledgement is sent on the first resource, and there is the first overlapping part between the reserved resource and the first resource and/or there is the second overlapping part between the resource for downlink transmission and the first resource.

Further, the transceiver unit is further configured to: when the processing unit determines that the downlink control information indicates that the uplink control information for feeding back channel state information is sent on the first resource, and there is the first overlapping part between the reserved resource and the first resource and/or there is the second overlapping part between the resource for downlink transmission and the first resource, send, based on the downlink control information, the uplink control information for feeding back channel state information, or send the uplink control information for feeding back channel state information on a part or all of the first resource except the first overlapping part and the second overlapping part; or, the processor is further configured to: when determining that the downlink control information indicates that the uplink control information for feeding back channel state information is sent on the first resource, and there is the first overlapping part between the reserved resource and the first resource and/or there is the second overlapping part between the resource for downlink transmission and the first resource, ignore the downlink control information.

Optionally, the transceiver unit is further configured to: receive first indication information, and determine that the first indication information indicates that there is a possibility that the first resource overlaps the second resource; and the processor is further configured to determine that there is the first overlapping part between the reserved resource and the first resource and/or there is the second overlapping part between the resource for downlink transmission and the first resource.

Optionally, the first indication information is further used to indicate whether the first information needs to be detected.

Optionally, the transceiver unit is further configured to receive second indication information, and the processor is further configured to determine that the second indication information indicates that the first information needs to be detected.

Optionally, the second indication information is further used to indicate configuration information of the first information. The configuration information includes at least one of a time-frequency resource, a resource mapping manner, an aggregation level, or a downlink control channel candidate.

Optionally, the first information is group-common downlink control information, and may be carried by a group-common downlink control channel, or may be carried by another channel. This is not limited herein.

For the communications apparatus provided in this embodiment of this application, reference may also be made to some descriptions in the foregoing communication method, and details are not described herein again.

FIG. 5 is a schematic structural diagram of a terminal device according to an embodiment of this application. The terminal device may be applicable to the system shown in FIG. 1. For ease of description, FIG. 5 shows only main components of the terminal device. As shown in FIG. 5, the terminal device 10 includes a processor, a memory, a control circuit, an antenna, and an input/output apparatus. The processor is mainly configured to: process a communication protocol and communication data, control the entire terminal device, execute a software program, and process data of the software program. For example, The processor is configured to: support the terminal device in performing actions described in the foregoing method embodiments, for example, determining that a second resource includes a reserved resource and/or a resource for downlink transmission, determining that the downlink control information indicates that uplink data information is sent on a first resource, determining that the downlink control information indicates that uplink control information for feeding back acknowledgement is sent on the first resource, determining that the downlink control information indicates that uplink control information for feeding back CSI is sent on the first resource, determining that there is a first overlapping part between the reserved resource and the first resource and/or there is a second overlapping part between the resource for downlink transmission and the first resource, and/or, determining how to send the uplink data information and/or uplink control information. The memory is mainly configured to store the software program and data, for example, store a correspondence between the first indication information described in the foregoing embodiment and a possibility of whether the first resource overlaps the second resource, or a correspondence between the first indication information and priorities of first information and the downlink control information. The control circuit is mainly configured to: convert a baseband signal and a radio frequency signal, and process the radio frequency signal. The control circuit, together with the antenna, may also be referred to as a transceiver that is mainly configured to send and receive a radio frequency signal in an electromagnetic wave form. The input/output apparatus, such as a touchscreen, a display, or a keyboard, is mainly configured to: receive data entered by a user and output data to the user.

After the terminal device is powered on, the processor may read a software program in a storage unit, explain and execute an instruction of the software program, and process data of the software program. When data needs to be sent in a wireless manner, the processor performs baseband processing on the to-be-sent data, and then outputs a baseband signal to a radio frequency circuit. After performing radio frequency processing on the baseband signal, the radio frequency circuit sends a radio frequency signal by using the antenna in an electromagnetic wave form. When data is sent to the terminal device, the radio frequency circuit receives a radio frequency signal by using the antenna, converts the radio frequency signal into a baseband signal, and outputs the baseband signal to the processor. The processor converts the baseband signal into data and processes the data.

A person skilled in the art may understand that, for ease of description, FIG. 5 shows only one memory and one processor. Actually, the terminal device may include a plurality of processors and a plurality of memories. The memory may also be referred to as a storage medium, a storage device, or the like. This is not limited in the embodiments of the present invention.

In an optional implementation, the processor may include a baseband processor and a central processing unit. The baseband processor is mainly configured to process the communication protocol and the communication data, and the central processing unit is mainly configured to: control the entire terminal device, execute the software program, and process the data of the software program. Functions of the baseband processor and the central processing unit may be integrated into the processor in FIG. 5. A person skilled in the art may understand that the baseband processor and the central processing unit each may be an independent processor, and are interconnected by using technologies such as a bus. A person skilled in the art may understand that the terminal device may include a plurality of baseband processors to adapt to different network standards, the terminal device may include a plurality of central processing units to enhance a processing capability of the terminal device, and all components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built into the processor, or may be stored in a storage unit in a form of a software program, so that the processor executes the software program to implement a baseband processing function.

In this embodiment of the present invention, an antenna having a transceiver function and a control circuit may be considered as a transceiver unit 101 of the terminal device 10, and for example, are configured to support the terminal device in performing the receiving function described in FIG. 3 and FIG. 4. A processor having a processing function is considered as a processing unit 102 of the terminal device 10. As shown in FIG. 5, the terminal device 10 includes the transceiver unit 101 and the processing unit 102. The transceiver unit may also be referred to as a transceiver, a transceiver machine, a transceiver apparatus, or the like. Optionally, a device configured to implement a receiving function in the transceiver unit 101 may be considered as a receiving unit, and a device configured to implement a sending function in the transceiver unit 101 may be considered as a sending unit. In other words, the transceiver unit 101 includes the receiving unit and the sending unit. The receiving unit may also be referred to as a receiver, an input port, a receiver circuit, or the like. The sending unit may be referred to as a transmitter machine, a transmitter, a transmitter circuit, or the like.

The processing unit 102 may be configured to execute an instruction stored in the memory, to control the transceiver unit 101 to receive a signal and/or transmit a signal to complete a function of the terminal device in the foregoing method embodiments. In an implementation, it may be considered that functions of the transceiver unit 101 are implemented by using a transceiver circuit or a transceiver-dedicated chip.

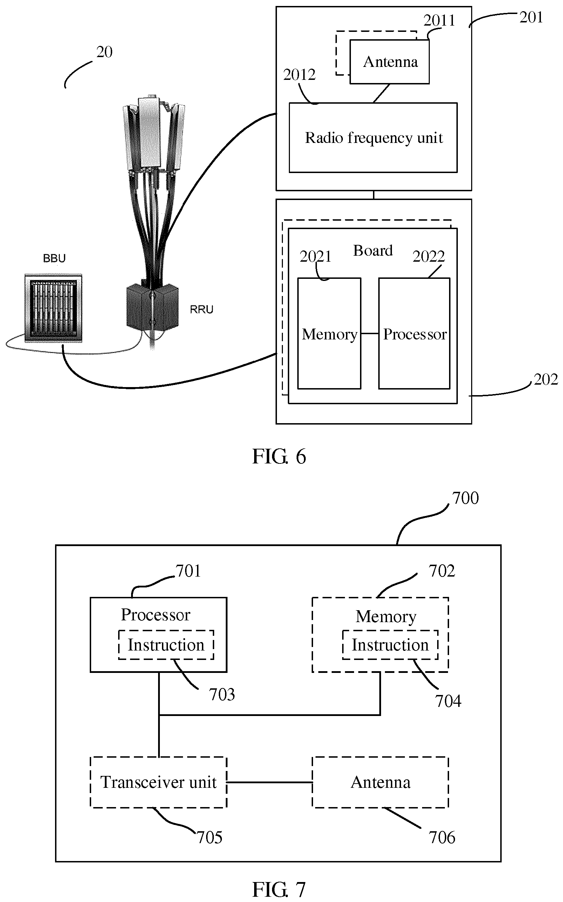

FIG. 6 is a schematic structural diagram of a network device according to an embodiment of this application, for example, may be a schematic structural diagram of a base station. As shown in FIG. 6, the base station may be applied to the system shown in FIG. 1 or FIG. 2, and perform functions of the base station in the foregoing method embodiments. The base station 20 includes one or more radio frequency units, such as a remote radio unit (remote radio unit, RRU) 201 and one or more baseband units (baseband unit, BBU) (also referred to as a digital unit, digital unit, DU) 202. The RRU 201 may be referred to as a transceiver unit, a transceiver, a transceiver circuit, a transceiver, or the like, and may include at least one antenna 2011 and a radio frequency unit 2012. The RRU 201 is mainly configured to: transmit and receive a radio frequency signal, and convert a radio frequency signal and a baseband signal, for example, send the signaling message in the foregoing embodiments to a terminal device. The BBU 202 is mainly configured to: perform baseband processing, control the base station, or the like. The RRU 201 and the BBU 202 may be physically disposed together, or may be physically separated, in other words, in a distributed base station.

The BBU 202 is a control center of the base station, may also be referred to as a processing unit, and is mainly configured to complete baseband processing functions such as channel coding, multiplexing, modulation, and spectrum spreading. For example, the BBU (the processing unit) may be configured to control the base station to perform an operation procedure of the base station in the foregoing method embodiments.

In an example, the BBU 202 may include one or more boards, and a plurality of boards may jointly support a radio access network (such as an LTE network) of a single access standard, or may separately support radio access networks (for example, an LTE network, a 5G network, or another network) of different access standards. The BBU 202 further includes a memory 2021 and a processor 2022. The memory 2021 is configured to store a necessary instruction and data. For example, the memory 2021 stores a correspondence between the first indication information in the foregoing embodiment and a possibility of whether the first resource overlaps the second resource, or a correspondence between the first indication information and priorities of first information and downlink control information. The processor 2022 is configured to control the base station to perform necessary actions, for example, configured to control the base station to perform an operation procedure of the base station in the foregoing method embodiments, for example, generate DCI, generate the first information, generate the first indication information, and/or generate second indication information. The memory 2021 and the processor 2022 may serve one or more boards. To be specific, a memory and a processor may be separately disposed on each board. Alternatively, a plurality of boards may share a same memory and a same processor. In addition, a necessary circuit may be further disposed on each board.

FIG. 7 is a schematic structural diagram of a communications apparatus 700. The apparatus 700 may be configured to implement the method described in the foregoing method embodiments, refer to descriptions in the foregoing method embodiments. The communications apparatus 700 may be a chip, a network device (such as a base station), a terminal device, another network device, or the like.

The communications apparatus 700 includes one or more processors 701. The processor 701 may be a general purpose processor, a special purpose processor, or the like. For example, the processor 701 may be a baseband processor or a central processing unit. The baseband processor may be configured to process a communication protocol and communication data. The central processing unit may be configured to: control a communication apparatus (such as a base station, a terminal, or the chip), execute a software program, and process data of the software program. The communications apparatus may include a transceiver unit, configured to input (receive) a signal and output (transmit) a signal. For example, the communications apparatus may be a chip, and the transceiver unit may be an input and/or output circuit or a communications interface, of the chip. The chip may be used for a terminal, a base station, or another network device. For another example, the communications apparatus may be a terminal, a base station, or another network device, and the transceiver unit may be a transceiver, a radio frequency chip, or the like.

The communications apparatus 700 includes one or more processors 701, and the one or more processors 701 may implement the method of the base station or the terminal device in the embodiment shown in FIG. 3.

In a possible design, the communications apparatus 700 includes a means (means) configured to generate downlink control information DCI and a means (means) configured to send the DCI. Functions of the means for generating the DCI and the means for sending the DCI may be implemented by using one or more processors. For example, the DCI may be generated by using one or more processors, and the DCI is sent by using a transceiver, an input/output circuit, or an interface of a chip. For the indication information, refer to related descriptions in the foregoing method embodiments.

In a possible design, the communications apparatus 700 includes a means (means) configured to generate DCI, first information, first indication information, and/or second indication information, a means (means) configured to send the DCI, the first information, the first indication information, and/or the second indication information, and a means (means) configured to receive uplink data information and/or uplink control information. For the DCI, the first information, the first indication information, and/or the second indication information, refer to related descriptions in the foregoing method embodiments. For example, the DCI, the first information, the first indication information, and/or the second indication information may be generated by using one or more processors, and the DCI, the first information, the first indication information, and/or the second indication information is sent by using a transceiver, an input/output circuit, or an interface of a chip. Refer to the descriptions in the foregoing method embodiments. The first information may be sent by using the DCI, and the first indication information and/or the second indication information may be sent by using higher layer signaling such as RRC signaling.

In a possible design, the communications apparatus 700 includes a means (means) configured to receive the DCI, first information, first indication information, and/or second indication information, a means (means) configured to send uplink data information and/or uplink control information, and a means configured to: determine that a second resource includes a reserved resource and/or a resource for downlink transmission, determine that there is a first overlapping part between the reserved resource and the first resource and/or there is a second overlapping part between the resource for downlink transmission and the first resource, and/or determine how to send the uplink data information and/or the uplink control information. Refer to related descriptions in the foregoing method embodiments for the DCI, the first information, the first indication information, and/or the second indication information, and how to determine that the second resource includes the reserved resource and/or the resource for the downlink transmission, and/or determining that there is the first overlapping part between the reserved resource and the first resource and/or there is the second overlapping part between the resource for downlink transmission and the first resource, and/or determining how to send the uplink data information and/or the uplink control information. For example, by using a transceiver, an input/output circuit, or an interface of a chip, the DCI, the first information, the first indication information, and/or the second indication information is received, and the uplink data information and/or the uplink control information is sent; and by using one or more processors based on the DCI and the first information, it is determined that there is the first overlapping part between the reserved resource and the first resource and/or there is the second overlapping part between the resource for downlink transmission and the first resource, to determine how to send the uplink data information and/or the uplink control information.

Optionally, in addition to implementing the method in the embodiment shown in FIG. 3, the processor 701 may further implement another function.

Optionally, in a design, the processor 701 may further include an instruction 703. The instruction may be run on the processor, so that the communications apparatus 700 performs the method described in the foregoing method embodiments.

In still another possible design, the communications apparatus 700 may further include a circuit, and the circuit may implement a function in the foregoing method embodiments.

In still another possible design, the communications apparatus 700 may include one or more memories 702 in which an instruction 704 is stored. The instruction may be run on the processor, so that the communications apparatus 700 performs the method described in the foregoing embodiments. Optionally, the memory may further store data. Optionally, the processor may further store an instruction and/or data. For example, the one or more memories 702 may store a correspondence between the first indication information described in the foregoing embodiments and a possibility of whether the first resource overlaps the second resource, a correspondence between the first indication information and priorities of the first information and the downlink control information, or a related parameter or table in the foregoing embodiments. The processor and the memory may be separately disposed, or may be integrated together.

In still another possible design, the communications apparatus 700 may further include a transceiver unit 705 and an antenna 706. The processor 701 may also be referred to as a processing unit, and controls the communications apparatus (a terminal or a base station). The transceiver unit 705 may be referred to as a transceiver machine, a transceiver circuit, or a transceiver, and is configured to implement a transceiver function of the communications apparatus by using the antenna 706.

An embodiment of this application further provides a communications system, including the foregoing network device and one or more terminal devices.

It should be understood that in this embodiment of this application, a processor may be a central processing unit (central processing unit, "CPU" for short), or the processor may be another general purpose processor, a digital signal processor (DSP), an application-specific integrated circuit (ASIC), a field programmable gate array (FPGA), or another programmable logic device, discrete gate or transistor logic device, discrete hardware component, or the like. The general purpose processor may be a microprocessor, or the processor may be any conventional processor or the like.

The memory may include a read-only memory and a random access memory, and provide an instruction and data for the processor. A part of the memory may further include a non-volatile random access memory.

In addition to a data bus, the bus system may include a power bus, a control bus, a status signal bus, and the like. However, for clear description, various types of buses in the figure are marked as the bus system.

In an implementation process, steps in the foregoing methods can be implemented by using a hardware integrated logic circuit in the processor, or by using instructions in a form of software. The steps of the method disclosed with reference to the embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory or an electrically erasable programmable memory, or a register. The storage medium is located in a memory, and the processor reads information in the memory and completes the steps in the foregoing method in combination with hardware of the processor. To avoid repetition, details are not described herein again.

It should be further understood that "first", "second", "third", "fourth", and various numbers in this specification are merely used for differentiation for ease of description, and are not construed as a limitation on the scope of the embodiments of the present invention.

It should be understood that the term "and/or" in this specification describes only an association relationship for describing associated objects and represents that three relationships may exist. For example, A and/or B may represent the following three cases: only A exists, both A and B exist, and only B exists. It should be understood that, in the embodiments of this application, sequence numbers of the foregoing processes do not indicate an execution sequence. An execution sequence of the processes should be determined based on functions and internal logic of the processes, but should not constitute any limitation on implementation processes of the embodiments of the present invention.

A person of ordinary skill in the art may be aware that, illustrative logical blocks (illustrative logical block) and steps (step) that are described in combination with the embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions (programs). When the computer program instruction (program) is loaded and executed on a computer, the processes or functions according to the embodiments of the present invention are completely or partially generated. The computer may be a general-purpose computer, a dedicated computer, a computer network, or another programmable apparatus. The computer instruction may be stored in a computer-readable storage medium or transmitted from a computer-readable storage medium to another computer-readable storage medium. For example, the computer instruction may be transmitted from a website, computer, server, or data center to another website, computer, server, or data center in a wired (such as a coaxial cable, an optical fiber, or a digital subscriber line (DSL)) or wireless (such as infrared, radio, or microwave) manner. The computer-readable storage medium may be any usable medium accessible by a computer, or a data storage device, such as a server or a data center, integrating one or more usable media. The usable medium may be a magnetic medium (such as a floppy disk, a hard disk, or a magnetic tape), an optical medium (such as a DVD), a semiconductor medium (such as a solid state disk (Solid State Disk, SSD)), or the like.

The protection scope of the present invention shall be subject to the protection scope of the claims.

## Claims

1. A communication method, comprising:
receiving (S301) downlink control information, wherein the downlink control information is used to indicate that a first resource is used to send uplink data information and/or uplink control information;
receiving (S302) first information, wherein the first information is used to indicate information about a second resource, and the second resource comprises at least one of a reserved resource, a resource for uplink transmission, or a resource for downlink transmission;
determining that the second resource comprises the reserved resource and/or the resource for downlink transmission;
**characterized in that**
when the downlink control information indicates that the uplink data information is sent on the first resource, and there is a first overlapping part between the reserved resource and the first resource and/or there is a second overlapping part between the resource for downlink transmission and the first resource, sending (S304) the uplink data information on a part or all of the first resource except the first overlapping part and the second overlapping part; and
when the downlink control information indicates that uplink control information for feeding back channel state information is sent on the first resource, and there is the first overlapping part between the reserved resource and the first resource and/or there is the second overlapping part between the resource for downlink transmission and the first resource, sending (S308), on a part or all of the first resource except the first overlapping part and the second overlapping part, the uplink control information for feeding back channel state information.

2. A communications apparatus, comprising:
a transceiver unit (401), configured to: receive downlink control information, wherein the downlink control information is used to indicate that a first resource is used to send uplink data information and/or uplink control information; and receive first information, wherein the first information is used to indicate information about a second resource, and the second resource comprises at least one of a reserved resource, a resource for uplink transmission, or a resource for downlink transmission; and
at least one processor (402), configured to determine that the second resource comprises the reserved resource and/or the resource for downlink transmission;
**characterized in that**
the transceiver unit (401) is further configured to: when the processor determines that the downlink control information indicates that the uplink data information is sent on the first resource, and there is a first overlapping part between the reserved resource and the first resource and/or there is a second overlapping part between the resource for downlink transmission and the first resource, send the uplink data information on a part or all of the first resource except the first overlapping part and the second overlapping part; and
the transceiver unit (401) is further configured to send, on a part or all of the first resource except the first overlapping part and the second overlapping part, the uplink control information for feeding back channel state information when it is determined that the downlink control information indicates that the uplink control information for feeding back channel state information is sent on the first resource, and there is the first overlapping part between the reserved resource and the first resource and/or there is the second overlapping part between the resource for downlink transmission and the first resource.

3. The method according to claim 1, wherein the sending the uplink data information on a part or all of the first resource except the first overlapping part and the second overlapping part comprises:
mapping, on a part or all of the first resource except the first overlapping part and the second overlapping part, the uplink data information after rate matching, or puncturing the uplink data information on the first overlapping part and the second overlapping part.

4. The method according to claim 1 or 3, wherein the first information is group-common downlink control information.

5. The method according to claim 1, 3 or 4, wherein the first resource comprises at least one symbol, and the second resource comprises at least one symbol.

6. The method according to claim 1 or any one of claims 3 to 5, wherein the first information is received after the downlink control information has been received.

7. The apparatus according to claim 2, wherein the transceiver unit (401) is further configured to map, on a part or all of the first resource except the first overlapping part and the second overlapping part, the uplink data information after rate matching, or puncturing the uplink data information on the first overlapping part and the second overlapping part.

8. The apparatus according to claim 2 or 7, wherein the first information is group-common downlink control information.

9. The apparatus according to any one of claim 2, 7 and 8, wherein the first resource comprises at least one symbol, and the second resource comprises at least one symbol.

10. The apparatus according to any one of claim 2, 7, 8, and 9, wherein the first information is received after the downlink control information has been received.

11. A computer readable storage medium, comprising a computer program, wherein when the computer program runs on a computer, the method according to claim 1 or any one of claims 3 to 6 is performed.

## Patentansprüche

1. Kommunikationsverfahren, umfassend:
Empfangen (S301) von Downlink-Steuerinformationen, wobei die Downlink-Steuerinformationen verwendet werden, um anzuzeigen, dass eine erste Ressource zum Senden von Uplink-Dateninformationen und/oder Uplink-Steuerinformationen verwendet wird;
Empfangen (S302) von ersten Informationen, wobei die ersten Informationen verwendet werden, um Informationen über eine zweite Ressource anzuzeigen, und die zweite Ressource mindestens eine der folgenden Ressourcen umfasst: eine reservierte Ressource, eine Ressource für Uplink-Übertragung oder eine Ressource für Downlink-Übertragung;
Bestimmen, dass die zweite Ressource die reservierte Ressource und/oder die Ressource für Downlink-Übertragung umfasst;
**dadurch gekennzeichnet, dass**
wenn die Downlink-Steuerinformationen angeben, dass die Uplink-Dateninformationen auf der ersten Ressource gesendet werden, und ein erster Überlappungsteil zwischen der reservierten Ressource und der ersten Ressource besteht und/oder ein zweiter Überlappungsteil zwischen der Ressource für Downlink-Übertragung und der ersten Ressource besteht, die Uplink-Dateninformationen auf einem Teil oder der gesamten ersten Ressource mit Ausnahme des ersten und des zweiten Überlappungsteils gesendet werden (S304); und
wenn die Downlink-Steuerinformationen angeben, dass Uplink-Steuerinformationen zur Rückmeldung von Kanalstatusinformationen auf der ersten Ressource gesendet werden, und ein erster Überlappungsteil zwischen der reservierten Ressource und der ersten Ressource besteht und/oder ein zweiter Überlappungsteil zwischen der Ressource für Downlink-Übertragung und der ersten Ressource besteht, die Uplink-Steuerinformationen zur Rückmeldung von Kanalstatusinformationen auf einem Teil oder der gesamten ersten Ressource mit Ausnahme des ersten und des zweiten Überlappungsteils gesendet werden (S308).

2. Kommunikationsvorrichtung, umfassend:
eine Transceivereinheit (401), die dazu konfiguriert ist:
Downlink-Steuerinformationen zu empfangen, wobei die Downlink-Steuerinformationen verwendet werden, um anzuzeigen, dass eine erste Ressource zum Senden von Uplink-Dateninformationen und/oder Uplink-Steuerinformationen verwendet wird; und erste Informationen zu empfangen, wobei die ersten Informationen verwendet werden, um Informationen über eine zweite Ressource anzuzeigen, und die zweite Ressource mindestens eine der folgenden Ressourcen umfasst: eine reservierte Ressource, eine Ressource für Uplink-Übertragung oder eine Ressource für Downlink-Übertragung; und
mindestens einen Prozessor (402), der dazu konfiguriert ist, zu bestimmen, dass die zweite Ressource die reservierte Ressource und/oder die Ressource für Downlink-Übertragung umfasst;
**dadurch gekennzeichnet, dass**
die Transceivereinheit (401) ferner dazu konfiguriert ist: wenn der Prozessor bestimmt, dass die Downlink-Steuerinformationen angeben, dass die Uplink-Dateninformationen auf der ersten Ressource gesendet werden, und ein erster Überlappungsteil zwischen der reservierten Ressource und der ersten Ressource besteht und/oder ein zweiter Überlappungsteil zwischen der Ressource für Downlink-Übertragung und der ersten Ressource besteht, die Uplink-Dateninformationen auf einem Teil oder der gesamten ersten Ressource mit Ausnahme des ersten und des zweiten Überlappungsteils zu senden; und
die Transceivereinheit (401) ferner dazu konfiguriert ist, die Uplink-Steuerinformationen zur Rückmeldung von Kanalstatusinformationen auf einem Teil oder der gesamten ersten Ressource mit Ausnahme des ersten und des zweiten Überlappungsteils zu senden, wenn bestimmt wird, dass die Downlink-Steuerinformationen angeben, dass die Uplink-Steuerinformationen zur Rückmeldung von Kanalstatusinformationen auf der ersten Ressource gesendet werden, und ein erster Überlappungsteil zwischen der reservierten Ressource und der ersten Ressource besteht und/oder ein zweiter Überlappungsteil zwischen der Ressource für Downlink-Übertragung und der ersten Ressource besteht.

3. Verfahren nach Anspruch 1, wobei das Senden der Uplink-Dateninformationen auf einem Teil oder der gesamten ersten Ressource mit Ausnahme des ersten und des zweiten Überlappungsteils Folgendes umfasst:
Zuordnen der Uplink-Dateninformationen nach der Ratenanpassung auf einen Teil oder die gesamte erste Ressource mit Ausnahme des ersten und des zweiten Überlappungsteils oder Punktieren der Uplink-Dateninformationen auf dem ersten und dem zweiten Überlappungsteil.

4. Verfahren nach Anspruch 1 oder 3, wobei die ersten Informationen gruppenbezogene Downlink-Steuerinformationen sind.

5. Verfahren nach Anspruch 1, 3 oder 4, wobei die erste Ressource mindestens ein Symbol umfasst und die zweite Ressource mindestens ein Symbol umfasst.

6. Verfahren nach Anspruch 1 oder einem der Ansprüche 3 bis 5, wobei die ersten Informationen empfangen werden, nachdem die Downlink-Steuerinformationen empfangen wurden.

7. Vorrichtung nach Anspruch 2, wobei die Transceivereinheit (401) ferner dazu konfiguriert ist, die Uplink-Dateninformationen nach der Ratenanpassung auf einem Teil oder der gesamten ersten Ressource mit Ausnahme des ersten und des zweiten Überlappungsteils zuzuordnen oder die Uplink-Dateninformationen auf dem ersten und dem zweiten Überlappungsteil zu punktieren.

8. Vorrichtung nach Anspruch 2 oder 7, wobei die ersten Informationen gruppenbezogene Downlink-Steuerinformationen sind.

9. Vorrichtung nach einem der Ansprüche 2, 7 oder 8, wobei die erste Ressource mindestens ein Symbol umfasst und die zweite Ressource mindestens ein Symbol umfasst.

10. Vorrichtung nach einem der Ansprüche 2, 7, 8 oder 9, wobei die ersten Informationen empfangen werden, nachdem die Downlink-Steuerinformationen empfangen wurden.

11. Computerlesbares Speichermedium, umfassend ein Computerprogramm, wobei, wenn das Computerprogramm auf einem Computer ausgeführt wird, der Computer das Verfahren nach Anspruch 1 oder einem der Ansprüche 3 bis 6 durchführt.

## Revendications

1. Procédé de communication, comprenant :
la réception (S301) d'informations de commande de liaison descendante, dans lequel les informations de commande de liaison descendante sont utilisées pour indiquer qu'une première ressource est utilisée pour envoyer des informations de données de liaison montante et/ou des informations de commande de liaison montante ;
la réception (S302) de premières informations, dans lequel les premières informations sont utilisées pour indiquer des informations concernant une seconde ressource, et la seconde ressource comprend au moins l'une d'une ressource réservée, d'une ressource pour la transmission en liaison montante, ou d'une ressource pour la transmission en liaison descendante ;
la détermination que la seconde ressource comprend la ressource réservée et/ou la ressource pour la transmission en liaison descendante ;
**caractérisé en ce que**
lorsque les informations de commande de liaison descendante indiquent que les informations de données de liaison montante sont envoyées sur la première ressource, et qu'il existe une première partie de chevauchement entre la ressource réservée et la première ressource et/ou qu'il existe une seconde partie de chevauchement entre la ressource pour la transmission en liaison descendante et la première ressource, l'envoi (S304) d'informations de données de liaison montante sur une partie ou la totalité de la première ressource à l'exception de la première partie de chevauchement et de la seconde partie de chevauchement ; et
lorsque les informations de commande de liaison descendante indiquent que des informations de commande de liaison montante destinées à renvoyer des informations d'état de canal sont envoyées sur la première ressource, et que la première partie de chevauchement entre la ressource réservée et la première ressource existe et/ou que la seconde partie de chevauchement entre la ressource pour la transmission en liaison descendante et la première ressource existe, l'envoi (S308), sur une partie ou la totalité de la première ressource à l'exception de la première partie de chevauchement et de la seconde partie de chevauchement, des informations de commande de liaison montante destinées à renvoyer des informations d'état de canal.

2. Appareil de communication, comprenant :
une unité d'émission-réception (401), configurée pour : recevoir des informations de commande de liaison descendante, dans lequel les informations de commande de liaison descendante sont utilisées pour indiquer qu'une première ressource est utilisée pour envoyer des informations de données de liaison montante et/ou des informations de commande de liaison montante ; et
recevoir des premières informations, dans lequel les premières informations sont utilisées pour indiquer des informations concernant une seconde ressource, et la seconde ressource comprend au moins l'une d'une ressource réservée, d'une ressource pour la transmission en liaison montante, ou d'une ressource pour la transmission en liaison descendante ; et
au moins un processeur (402), configuré pour déterminer que la seconde ressource comprend la ressource réservée et/ou la ressource pour la transmission en liaison descendante ;
**caractérisé en ce que**
l'unité d'émission-réception (401) est également configurée pour : lorsque le processeur détermine que les informations de commande de liaison descendante indiquent que les informations de données de liaison montante sont envoyées sur la première ressource, et qu'il existe une première partie de chevauchement entre la ressource réservée et la première ressource et/ou qu'il existe une seconde partie de chevauchement entre la ressource pour la transmission en liaison descendante et la première ressource, envoyer les informations de données de liaison montante sur une partie ou la totalité de la première ressource à l'exception de la première partie de chevauchement et de la seconde partie de chevauchement ; et
l'unité d'émission-réception (401) est également configuré pour envoyer, sur une partie ou la totalité de la première ressource à l'exception de la première partie de chevauchement et de la seconde partie de chevauchement, les informations de commande de liaison montante destinées à renvoyer des informations d'état de canal lorsqu'il est déterminé que les informations de commande de liaison descendante indiquent que les informations de commande de liaison montante destinées à renvoyer des informations d'état de canal sont envoyées sur la première ressource, et que la première partie de chevauchement entre la ressource réservée et la première ressource existe et/ou que la seconde partie de chevauchement entre la ressource pour la transmission en liaison descendante et la première ressource existe.

3. Procédé selon la revendication 1, dans lequel l'envoi des informations de données de liaison montante sur une partie ou la totalité de la première ressource à l'exception de la première partie de chevauchement et de la seconde partie de chevauchement, comprend :
le mappage, sur une partie ou la totalité de la première ressource à l'exception de la première partie de chevauchement et de la seconde partie de chevauchement, des informations de données de liaison montante après correspondance de débit, ou
perforation des informations de données de liaison montante sur la première partie de chevauchement et la seconde partie de chevauchement.

4. Procédé selon la revendication 1 ou 3, dans lequel les premières informations sont des informations de commande de liaison descendante communes de groupe.

5. Procédé selon la revendication 1, 3 ou 4, dans lequel la première ressource comprend au moins un symbole, et la seconde ressource comprend au moins un symbole.

6. Procédé selon la revendication 1 ou l'une quelconque des revendications 3 à 5, dans lequel les premières informations sont reçues après la réception des informations de commande de liaison descendante.

7. Appareil selon la revendication 2, dans lequel l'unité d'émission-réception (401) est également configurée pour mapper, sur une partie ou la totalité de la première ressource à l'exception de la première partie de chevauchement et de la seconde partie de chevauchement, les informations de données de liaison montante après correspondance de débit, ou perforation des informations de données de liaison montante sur la première partie de chevauchement et la seconde partie de chevauchement.

8. Appareil selon la revendication 2 ou 7, dans lequel les premières informations sont des informations de commande de liaison descendante communes de groupe.

9. Appareil selon l'une quelconque revendication 2, 7 et 8, dans lequel la première ressource comprend au moins un symbole, et la seconde ressource comprend au moins un symbole.

10. Appareil selon l'une quelconque revendication 2, 7, 8 et 9, dans lequel les premières informations sont reçues après la réception des informations de commande de liaison descendante.

11. Support de stockage lisible par ordinateur, comprenant un programme informatique, dans lequel lorsque le programme informatique est exécuté sur un ordinateur, le procédé selon la revendication 1 ou l'une quelconque des revendications 3 à 6 est réalisé.
